(19) Europäisches Patentamt / European Patent Office / Office européen des brevets

(11) EP 2 371 896 B1

(12) **EUROPEAN PATENT SPECIFICATION**

(45) Date of publication and mention of the grant of the patent:
**12.02.2014 Bulletin 2014/07**

(21) Application number: **09834874.1**

(22) Date of filing: **22.12.2009**

(51) Int Cl.:
***C08L 23/04*** *(2006.01)* ***C08F 4/60*** *(2006.01)*
***C08F 6/00*** *(2006.01)* ***C08F 10/02*** *(2006.01)*
***D01F 6/04*** *(2006.01)* ***D02G 3/06*** *(2006.01)*
***C08F 10/00*** *(2006.01)* ***D01D 5/42*** *(2006.01)*
***D01F 6/46*** *(2006.01)* ***C08F 110/02*** *(2006.01)*

(86) International application number:
**PCT/JP2009/071312**

(87) International publication number:
**WO 2010/074073 (01.07.2010 Gazette 2010/26)**

# (54) ETHYLENE POLYMER COMPOSITION, MANUFACTURING METHOD THEREFOR, AND MOLDED ARTICLE OBTAINED USING SAME

ETHYLEN-POLYMER-ZUSAMMENSETZUNG, VERFAHREN ZU IHRER HERSTELLUNG UND DARAUS HERGESTELLTER FORMARTIKEL

COMPOSITION DE POLYMÈRE D'ÉTHYLÈNE, PROCÉDÉ DE FABRICATION ASSOCIÉ, ET ARTICLE MOULÉ FABRIQUÉ AVEC CETTE COMPOSITION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008332879**

(43) Date of publication of application:
**05.10.2011 Bulletin 2011/40**

(73) Proprietor: **Mitsui Chemicals, Inc.**
**Tokyo 105-7117 (JP)**

(72) Inventors:
- **SUGIYAMA, Kazuto**
**Sodegaura-shi**
**Chiba 299-0265 (JP)**
- **KUBO, Mineo**
**Sodegaura-shi**
**Chiba 299-0265 (JP)**
- **MORITA, Atsushi**
**Sodegaura-shi**
**Chiba 299-0265 (JP)**
- **KAI, Yasuhiro**
**Kuga-gun**
**Yamaguchi 740-0061 (JP)**
- **SUGIMURA, Kenji**
**Kuga-gun**
**Yamaguchi 740-0061 (JP)**

(74) Representative: **HOFFMANN EITLE**
**Patent- und Rechtsanwälte**
**Arabellastrasse 4**
**81925 München (DE)**

(56) References cited:
**EP-A2- 0 315 481** **EP-A2- 0 318 190**
**WO-A1-03/022920** **JP-A- 6 322 190**
**JP-A- 63 010 647** **JP-A- 63 159 408**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an ethylene polymer composition having an extremely high molecular weight and a specific composition. The present invention also relates to a method for producing the ethylene polymer composition and a molded article obtained by using the composition.

### Background Art

So-called ultrahigh molecular weight ethylene polymers, which have extremely high molecular weight, are excellent in impact resistance, abrasion resistance, chemical resistance, strength and the like, as compared with general-purpose ethylene polymers, and thus have excellent characteristics as engineering plastics.

Such ultrahigh molecular weight ethylene polymers are known to be obtained by using publicly known catalysts such as so-called Ziegler catalysts composed of a halogen-containing transition metal compound and an organometallic compound, and magnesium compound supported catalysts as described in JP-1991-130116A (Patent Document 1), and JP-1995-156173A (Patent Document 2). Recently, in terms of production efficiency and the like, ultrahigh molecular weight ethylene polymers are usually produced using highly active catalysts such as magnesium compound supported catalysts and the like.

On the other hand, it is said that ultrahigh molecular weight ethylene polymers are not suited for melt molding, which is a general resin molding method, because of their high molecular weight. For this reason, molding methods have been developed such as a method in which an ultra-high molecular weight ethylene polymer is gelled and then molded, and a solid phase drawing method in which ultrahigh molecular weight ethylene polymer particles are pressure-bonded with each other at a temperature of not more than the melting point, and are then drawn. Such methods are described in Patent Document 2, JP-1997-254252A (Patent Document 3), JP-1988-041512A (Patent Document 4), and JP-1988-066207A (Patent Document 5) and the like.

### Citation List

### Patent Document

Patent Document 1: JP-1991-130116A
Patent Document 2: JP-1995-156173A
Patent Document 3: JP-1997-254252A
Patent Document 4: JP-1988-41512A
Patent Document 5: JP-1988-66207A
Patent Document 6: WO-2008-013144A pamphlet

JP 63-010647 A and EP 0 227 838 describe a polyethylene composition comprising a ultra-high-molecular polyethylene with an intrinsic viscosity of at least 12 dl/g, and a low-molecular-weight to high-molecular-weight polyethylene having an intrinsic viscosity of 0.1 to 5 dl/g, which may be prepared in a multiple stage polymerization process wherein the high-molecular weight component is prepared in the first step.

WO 2003/022920 A1 and US 2004/0039115 A1 describe a polyethylene resin composition which is obtainable by a process comprising a first step of producing a polyethylene having an intrinsic viscosity of of 10 to 40 dl/g, and a second step of producing a polyethylene having an intrinsic viscosity of 0.1 to 5 dl/g with a Ziegler catalyst.

JP 06-322190 A and EP 0 617 081 concern polyethylene mixtures of a polyethylene with an intrinsic viscosity of 10 to 50 dl/g and a polyethylene with an intrinsic viscosity of 1 to 7 dl/g.

### Summary of Invention

### Technical Problem

Specific molding methods using polymer particles such as the solid phase drawing method and the like, have been said to have a problem that the resultant molded article has relatively low strength since the polymer particles are pressure-bonded at a temperature of not more than the melting point of the particles. In order to solve this problem, ethylene polymer with high degree of crystallinity and high heat of fusion are required.

Conventionally, it has been said that ethylene polymer particles with less surface concavity and convexity are suitable for the solid phase drawing molding. However, the inventors have found that polymer particles with a specific shape having more surface concavity and convexity are capable of solving the problem since such concavity and convexity increase contact points and contact areas when the particles come into contact, and have also found that ethylene polymer particles with high degree of crystallinity are suitable for the solid phase drawing molding (Patent Document 6). Still, further improvement in drawability is desired.

Means for Solving the Problem

It has been considered that an ultrahigh molecular weight ethylene polymer, which has an extremely high molecular weight, is difficult to draw-process and thus cannot provide a sufficient drawability. In fact, the Patent Document 6 discloses that in order to achieve a range of the molecular weight suitable for the solid phase drawing molding, the intrinsic viscosity [η] is limited to be in the range of 5 to 30 dL/g.

Under the circumstances, it has been considered difficult among skilled person in the art to produce a solid phase drawn molded article using an ethylene polymer composition with an intrinsic viscosity [n] of more than 30 dL/g.

The present inventors, however, have found out that the drawability of the ethylene polymer composition is surprisingly further improved and the resultant fibers have a significantly high tensile strength, by the use of an ultrahigh molecular weight ethylene polymer, which has higher molecular weight; specifically, by making the [η] of the entire ethylene polymer composition fall within the range of more than 30 dL/g and not more than 50 dL/g, the composition comprising an ethylene polymer (a) with an intrinsic viscosity [η] of not less than 2 dL/g and not more than 20 dL/g and an ethylene polymer (b) with an intrinsic viscosity [η] of more than 35 dL/g and not more than 50 dL/g, with the mass ratio (a)/(b) being from 5/95 to 50/50. The present invention has been completed based on these findings.

That is to say, the present invention is directed to an ethylene polymer composition obtainable by a process comprising carrying out the polymerization in two or more stages:

an initial first stage of producing an ethylene polymer (a) with an intrinsic viscosity [η](a) of not less than 2 dUg and not more than 20 dUg, and

a subsequent second stage of producing an ethylene polymer (b) with an intrinsic viscosity [η] of more than 35 dL/g and not more than 50 dL/g,

with the mass ratio (a)/(b) being from 5/95 to 50/50 and the intrinsic viscosity [η](total) for the entire composition being more than 30 dUg and not more than 50 dUg,

wherein the intrinsic viscosity values [η](a) and [η](total) are measured in decalin solvent at 135°C and [η](b) is calculated by the formula

$$[\eta](b) = ([\eta](total) - [\eta](a) \times w(a)) \ / \ w(b)$$

wherein w(a) and w(b) are the mass fractions of the polymer (a) and the polymer (b), respectively.

Further, the ethylene polymer composition preferably has a degree of crystallinity of not less than 80%. The proportion of particles with a particle diameter of 355 μm or more is preferably 2% by mass or less of the total particles and the average particle diameter is preferably 100 μm to 300 μm.

The ethylene polymer composition is preferably obtainable from the reaction of not less than 500 g of ethylene per 1 g of a solid catalyst component.

Further, the ethylene polymer composition is preferably obtainable by polymerizing olefins including ethylene in the presence of an olefin polymerization catalyst comprising:

a solid titanium catalyst component [A] comprising magnesium, a halogen and titanium, and

an organometallic compound catalyst component [B] comprising a metal element selected from Group 1, Group 2 and Group 13 of the periodic table.

Moreover, a method for producing the ethylene polymer composition of the present invention preferably comprises:

a step of polymerizing olefins including ethylene, in the presence of an olefin polymerization catalyst comprising:

a solid titanium catalyst component [A] comprising magnesium, a halogen and titanium, and

an organometallic compound catalyst component [B] comprising a metal element selected from Group 1, Group 2 and Group 13 of the periodic table; and
a step of keeping a polymer obtained in the above step at temperatures of 90°C or higher and not more than a melting point of the polymer for 15 minutes to 24 hours.

The process for producing the ethylene polymer composition preferably comprises:

a step of producing an ethylene polymer (a) with an intrinsic viscosity [η] of not less than 2 dL/g and not more than 20 dL/g, and

a step of producing an ethylene polymer (b) with an intrinsic viscosity [η] of more than 35 dL/g and not more than 50 dL/g, wherein the ratio of the component (a) is 0 to 50% by mass and the ratio of the component (b) is 100 to 50% by mass per 100% by mass total of the ethylene polymer composition produced through the above two steps.

Further, in the process for producing the ethylene polymer composition, the polymerization step of the component (a) is preferably carried out before the polymerization step of the component (b).
The present invention is also directed to a molded article obtainable using the ethylene polymer composition as mentioned above. The molded article is preferably a flat yarn or a fiber obtainable by solid phase drawing molding.

Advantageous Effects of Invention

The ethylene polymer composition of the present invention has an extremely high molecular weight compared with a traditional ethylene polymer composition, and furthermore, because of having the compositions set forth hereinabove, can provide a molded article having high strength, for example in the case of solid phase drawing molding.

Description of Embodiments

Hereinafter, further detailed descriptions are provided regarding an ethylene polymer composition according to the present invention, a method for producing the same and a molded article obtained using the ethylene polymer composition.

<Ethylene Polymer Composition>

In the present invention, copolymerization may be referred to as polymerization and a copolymer may be referred to as a polymer.
The ethylene polymer composition of the present invention is characterized by satisfying the following requirements.
The ethylene polymer composition is obtainable by a process comprising carrying out the polymerization in two or more stages:

an initial first stage of producing an ethylene polymer (a) with an intrinsic viscosity [η](a) of not less than 2 dUg and not more than 20 dUg, and
a subsequent second stage of producing an ethylene polymer (b) with an intrinsic viscosity [η] of more than 35 dL/g and not more than 50 dL/g,
with the mass ratio (a)/(b) being from 5/95 to 50/50 and the intrinsic viscosity [η](total) for the entire composition being more than 30 dUg and not more than 50 dUg,
wherein the intrinsic viscosity values [η](a) and [η](total) are measured in decalin solvent at 135°C and [n](b) is calculated by the formula

$$[\eta](b) = ([\eta](total) - [\eta](a) \times w(a)) \; / \; w(b)$$

wherein w(a) and w(b) are the mass fractions of the polymer (a) and the polymer (b), respectively.

The above intrinsic viscosity is a value measured in decalin solvent at 135°C.
The intrinsic viscosity [η] of each component in the composition is preferably as follows.
The intrinsic viscosity of the component (a) is preferably 5 to 18 dL/g, more preferably 8 to 15 dL/g, still more

preferably 10 to 13 dL/g; and

The intrinsic viscosity of the component (b) is preferably more than 35 dL/g and not more than 45 dL/g, more preferably more than 35 dL/g and not more than 40 dL/g, still more preferably more than 35 dL/g and not more than 39 dL/g.

The intrinsic viscosity of the entire composition is preferably more than 30 dL/g and not more than 40 dL/g, more preferably more than 30 dL/g and not more than 35 dL/g, still more preferably more than 30 dL/g and not more than 33 dL/g.

The upper limit and lower limit of the mass ratio of each component is as follows. For the component (a), the upper limit of the mass ratio is 50%, preferably 40% and more preferably 35%, still more preferably 30%; and the lower limit of the mass ratio is 0%, preferably 5%, more preferably 10%, still more preferably 15%, most preferably 20%.

For the component (b), the upper limit of the mass ratio is 100%, preferably 95%, more preferably 90%, still more preferably 85%, most preferably 80%; and the lower limit of the mass ratio is 50%, preferably 60%, more preferably 65%, still more preferably 70%.

The degree of crystallinity of the ethylene polymer composition of the present invention is usually not less than 80%, preferably 80% to 90% and more preferably 80% to 88%. The above degree of crystallinity is a value measured by X-ray crystal analysis with the use of RINT2500 type apparatus manufactured by Rigaku Corporation.

The heat of fusion of the ethylene polymer composition of the present invention is preferably not less than 210 J/g, more preferably 210 to 240 J/g, still more preferably 220 to 240 J/g, most preferably 225 to 240 J/g. The above heat of fusion is given from a melting peak obtained by heating the composition from 30°C to 200°C by raising temperature at a rate of 10°C/min with the use of a RDC-220 Robot DSC module produced by SEICO Electronics Industrial Co. by Differential Scanning Calorimetry (DSC).

The ethylene polymer composition of the present invention is suitable for solid phase drawing molding, as is described later. When an ethylene polymer is molded at temperature of not more than the melting point as in solid phase drawing molding, it is considered that the moldability is greatly affected by the adhesion between polymer particles and the molecular weight.

In the ethylene polymer composition having such a composition as mentioned above, it is considered that the component (b), in particular, contributes to the higher strength of a solid phase drawn molded article. Yet, in the case of particles of an ethylene polymer composition having a high molecular weight, the adhesion between particles is inferior and as a result thereof, the particles may exhibit insufficient drawability. The superior moldability of the particles of the ethylene polymer composition of the present invention is considered to be due to the adhesion between particles achieved by the composition further comprising component (a) having a lower molecular weight than that of the component (b).

Examples of each ethylene polymer constituting the ethylene polymer composition of the present invention include an ethylene homopolymer and a crystalline copolymer mainly comprising ethylene obtained by copolymerizing ethylene and a small amount of $\alpha$-olefins such as propylene, 1-butene, 4-methyl-1-pentene, 1-pentene, 1-hexene, 1-octene and 1-decene. In view of increasing the degree of crystallinity and in view of drawability in later-mentioned solid phase drawing molding, the ethylene homopolymer is preferable. Depending on an olefin polymerization catalyst used, an ethylene polymer having a branched structure may be obtained. Such a branch is preferably absent in each ethylene polymer constituting the ethylene polymer composition of the present invention.

The ethylene polymer composition may be combined with various known stabilizers as needed. Examples of such stabilizers include heat-resistant stabilizers such as tetrakis [methylene(3,5-di-t-butyl-4-hydroxy)hydrocinnamate] methane and distearylthiodipropionate and weather-resistant stabilizers such as bis(2,2',6,6'-tetramethyl-4-piperidine) sebacate and 2-(2-hydroxy-t-butyl-5-methylphenyl)-5-chlorobenzotriazole. Further, as a colorant, an inorganic or organic dry color may be added. Further, as stabilizers such as a lubricant and a hydrogen chloride absorbent, a known stearate such as calcium stearate is exemplified as a suitable stabilizer.

The ethylene polymer composition of the present invention is preferably in the form of particles. In a preferable embodiment, the average particle diameter is usually 100 to 300 $\mu$m and at the same time, the proportion of particles with a particle diameter of 355 $\mu$m or more is not more than 2% by mass; in a more preferable embodiment, the proportion of particles with a particle diameter of 250 $\mu$m or more is not more than 2% by mass; and in a most preferable embodiment, particles with a particle diameter of 250 $\mu$m or more is not contained. The lower limit of the average particle diameter is preferably 110 $\mu$m, more preferably 120 $\mu$m, particularly preferably 130 $\mu$m. On the other hand, the upper limit of the average particle diameter is preferably 280 $\mu$m, more preferably 260 $\mu$m.

The larger the average particle diameter of the particles of the ethylene polymer composition produced by polymerization of ethylene and other $\alpha$ olefins used as required is, the more easily polymerization reaction heat remains in the particles of the composition; and thus, the particles may be partially molten or may be fused together. Such melting and fusion will increase the entangling of polymer chains of the particles of the ethylene polymer composition. Such increase of the entangling of polymer chains tends to deteriorate drawability of a resin for solid phase drawing molding. Therefore, when the average particle diameter exceeds the above-mentioned particle diameter upper limit, moldability in solid phase drawing may be deteriorated.

When the average particle diameter of the particles of the ethylene polymer composition is lower than the

above-mentioned particle diameter lower limit, a problem may occur in handling because of charging tendency and the like.

In the particles of the ethylene polymer composition of the present invention, the proportion of particles with a particle diameter of 355 μm or more is preferably not more than 1.5% by mass, more preferably not more than 1.0% by mass.

The presence of bulky particles such as particles having a particle diameter of over 355 μm raises the possibility of inhibition of uniformity of a molded article in the production of a solid phase drawn molded article. For example, in the preparation of a compressed sheet in a first stage of the production of a drawn molded article described later, a part containing such bulky particles raises the possibility of disturbance of uniformity of the sheet. This poor uniformity portion may trigger breakage of the sheet in a drawing molding process in a second or later stage, and may reduce draw ratio.

The average particle diameter of the particles of the ethylene polymer composition of the present invention is a so-called median diameter, and can be measured by a sieving method in which 6 to 9 sieves of different mesh diameters are superimposed and the particle size distribution of the particles of the ethylene polymer composition is measured. When a sieve having a mesh diameter of 355 μm is included in the sieves, the content of the bulky particles can also be measured simultaneously.

<Olefin Polymerisation Catalyst>

As long as the intrinsic viscosities and configurations of the ethylene polymer composition of the present invention can be achieved, a known olefin polymerization catalyst can be used without limitation.

It is preferable that the olefin polymerization catalyst is a highly active catalyst which comprise a solid catalyst component and by which an ethylene polymer is produced in an amount of 500 g or more, namely an ethylene is reacted in an amount of 500 g or more, per 1 g of the solid catalyst component. It is more preferable to use a catalyst component by which an ethylene polymer is produced in an amount of 1,000 g or more, further preferably 2,000 g or more per 1 g of the solid catalyst component. Though setting the upper limit of this so-called polymerization activity has no significant meaning, in view of the risk that the produced ethylene polymer can be molten by polymerization reaction heat, the activity is usually not more than 60,000 g polymer/g solid catalyst component, preferably not more than 30,000 g polymer/g solid catalyst component.

The solid catalyst component in the present invention is preferably a solid titanium catalyst component comprising magnesium, a halogen and titanium, as shown later.

An ethylene polymer composition produced with an olefin polymerization catalyst comprising a solid catalyst component is said to be an aggregate of ethylene polymer blocks produced at active sites in the solid catalyst component. The highly active solid catalyst as described above has relatively many active sites in the catalyst; and thus, the ethylene polymer composition produced with the olefin polymerization catalyst comprising the solid catalyst component is an aggregate of more ethylene polymer blocks. Therefore, it is considered that the ethylene polymer composition tends to have a larger surface area. Since the solid catalyst component has high activity, it is assumed that some of the polyolefin are produced through fine pores of the solid catalyst component to form a shape of filament or pillar.

Preferable examples of the olefin polymerization catalyst as described above include olefin polymerization catalysts comprising:

a solid titanium catalyst component [A] comprising magnesium, a halogen and titanium, and
an organometallic compound catalyst component [B] comprising a metal element selected from Group 1, Group 2 and Group 13 of the periodic table. Examples of these catalysts will be described in detail below.

[Solid Titanium Catalyst Component [A]]

Examples of the solid titanium catalyst component [A] comprising titanium, magnesium, and a halogen include solid titanium catalyst components described in Patent Document 1 and Patent Document 2, and additionally, in JP-1981-811A, JP-1982-63310A, JP-1983-83006A, JP-1991-706A, JP-1990-255810A, JP-1992-218509A and the like. Such solid titanium catalyst components can be obtained by the contact with each other of magnesium compounds, titanium compounds and, if necessary, electron donors.

<Magnesium Compound>

Specifically mentioned as the magnesium compound are publicly known magnesium compounds such as:

magnesium halides such as magnesium chloride and magnesium bromide;
alkoxy magnesium halides such as methoxy magnesium chloride, ethoxy magnesium chloride and phenoxy magnesium chloride;
alkoxy magnesiums such as ethoxy magnesium, isopropoxy magnesium, butoxy magnesium and 2-ethylhexoxy magnesium;
aryloxy magnesiums such as phenoxy magnesium; and
carboxylates of magnesium such as magnesium stearate.

These magnesium compounds may be used alone or in combination of two or more. These magnesium compounds may be complex compounds or composite compounds with other metals, or mixtures with other metal compounds.
Of these compounds, the magnesium compounds containing a halogen are preferable, and the magnesium halides, in particular magnesium chloride is preferable. Additionally, alkoxy magnesiums such as ethoxy magnesium are also preferably used. The magnesium compounds also include those derived from other substances, for example, those obtained by contact of organomagnesium compounds such as a Grignard reagent with titanium halides, silicon halides, alcohol halides and the like.

<Titanium Compound>

As the titanium compound, for example, tetravalent titanium compounds represented by the general formula (1) are mentioned.

$$Ti\,(OR)_gX_{4-g} \qquad (1)$$

In the general formula (1), R represents a hydrocarbon group, X represents a halogen atom, and g is $0 \leq g \leq 4$. Specific examples include:

titanium tetrahalides such as $TiCl_4$, and $TiBr_4$;
alkoxy titanium trihalides such as $Ti\,(OCH_3)Cl_3$, $Ti\,(OC_2H_5)Cl_3$, $Ti(O\text{-}n\text{-}C_4H_9)Cl_3$, $Ti(OC_2H_5)Br_3$, and $Ti(O\text{-}iso\text{-}C_4H_9)Br_3$;
alkoxy titanium dihalides such as $Ti(OCH_3)_2Cl_2$, and $Ti(OC_2H_5)_2Cl_2$;
alkoxy titanium monohalides such as $Ti(OCH_3)_3Cl$, $Ti(O\text{-}n\text{-}C_4H_9)_3Cl$, and $Ti(OC_2H_5)_3Br$; and
tetraalkoxy titaniums such as $Ti(OCH_3)_4$, $Ti(OC_2H_5)_4$, $Ti(OC_4H_9)_4$, and $Ti(O\text{-}2\text{-}ethylhexyl)_4$.

Of them, the titanium tetrahalides are preferable, and particularly, the titanium tetrachloride is preferable. These titanium compounds may be used alone or in combination of two or more.

<Electron Donor>

The solid titanium catalyst component [A] of the present invention may comprise a publicly known electron donor or a substituted derivative thereof. Preferable examples of the electron donor include electron donors (a) selected from aromatic carboxylic acid esters, alicyclic carboxylic acid esters, and compounds with two or more ether bonds via a carbon atom (preferably, a plurality of carbon atoms), that is, polyether compounds.
If the solid titanium catalyst component [A] of the present invention comprises the electron donor, the molecular weight of the resultant ethylene polymer can be controlled at high level, and the molecular weight distribution can be controlled, in some cases.
Specific examples of such aromatic carboxylic acid esters include aromatic carboxylic acid monoesters such as toluic acid ester, and aromatic polycarboxylic acid esters such as phthalic acid ester. Of them, the aromatic polycarboxylic acid esters are preferable, and phthalic acid ester is more preferable. As the phthalic acid ester, preferable are phthalic acid alkyl esters such as ethyl phthalate, n-butyl phthalate, isobutyl phthalate, diisobutyl phthalate, hexyl phthalate, and heptyl phthalate, and particularly preferable is diisobutyl phthalate.
As the alicyclic carboxylic acid ester compound, alicyclic polycarboxylic acid ester compounds represented by the following general formula (2) are mentioned.

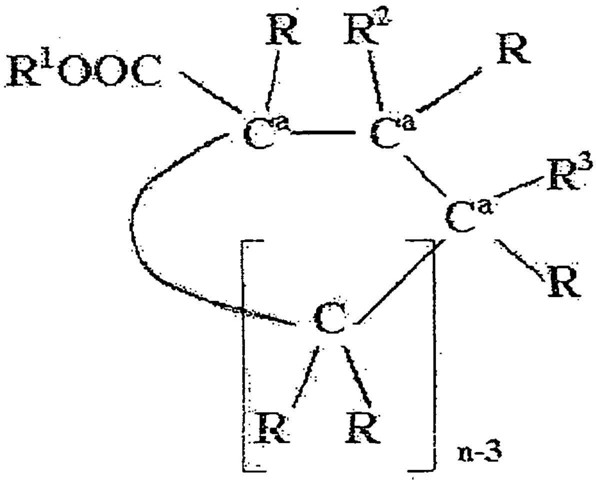

. . . (2)

In the general formula (2), n represents an integer of 5 to 10, preferably 5 to 7, particularly preferably 6. $C^a$ represents a carbon atom.

$R^2$ and $R^3$ represent each independently $COOR^1$ or R, and at least one of $R^2$ and $R^3$ represents $COOR^1$.

Although it is preferable that bonds between carbon atoms in the cyclic skeleton are all single bonds, any of the single bonds in the cyclic skeleton other than $C^a$-$C^a$ bonds may be substituted with a double bond.

A plurality of $R^1$s represent each independently a monovalent hydrocarbon group having 1 to 20, preferably 1 to 10, more preferably 2 to 8, further preferably 4 to 8, particularly preferably 4 to 6 carbon atoms.

Examples of the hydrocarbon groups include ethyl group, n-propyl group, isopropyl group, n-butyl group, isobutyl group, hexyl group, heptyl group, octyl group, 2-ethylhexyl group, decyl group, dodecyl group, tetradecyl group, hexadecyl group, octadecyl group and eicosyl group. Among them, preferable are n-butyl group, isobutyl group, hexyl group and octyl group, and further preferable are n-butyl group and isobutyl group.

A plurality of Rs represent each independently an atom or group selected from a hydrogen atom, hydrocarbon groups having 1 to 20 carbon atoms, halogen atoms, nitrogen-containing groups, oxygen-containing groups, phosphorus-containing groups, halogen-containing groups and silicon-containing groups.

R represents preferably a hydrocarbon group having 1 to 20 carbon atoms. Examples of the hydrocarbon groups having 1 to 20 carbon atoms include aliphatic hydrocarbon groups, alicyclic hydrocarbon groups and aromatic hydrocarbon groups such as methyl group, ethyl group, n-propyl group, iso-propyl group, n-butyl group, iso-butyl group, sec-butyl group, n-pentyl group, cyclopentyl group, n-hexyl group, cyclohexyl group, vinyl group, phenyl group and octyl group. Of them, the aliphatic hydrocarbon groups are preferable, and specifically methyl group, ethyl group, n-propyl group, iso-propyl group, n-butyl group, iso-butyl group and sec-butyl group are preferable.

Rs may be bonded together to form a ring, and the skeleton of the ring formed by the mutual bonding of Rs may contain a double bond. When two or more $C^a$s bonded to $COOR^1$ are contained in the skeleton of the ring, the number of carbon atoms constituting the skeleton of the ring is 5 to 10.

As the skeleton of the ring, a norbornane skeleton, tetracyclododecene skeleton and the like are mentioned.

A plurality of Rs may be carboxylic acid ester groups, alkoxy groups, siloxy groups, carbonyl structure-containing groups such as aldehyde groups, acetyl groups and the like, and it is preferable that these substituents contain one or more hydrocarbon groups.

Preferable examples of such alicyclic ester compounds include:

3,6-dimethylcyclohexane-1,2-dicarboxylic acid ester,
3-methyl-6-propylcyclohexane-1,2-dicarboxylic acid ester, and cycichexane-1,2-dicarboxylic acid ester.

The compounds having diester structures as described above include isomers such as cis and trans isomers deriving from a plurality of $COOR^1$ groups in the general formula (2). Any of the structures exhibits an effect corresponding to the object of the present invention. In terms of polymerization activity and the like, it is preferable that the content of trans isomer is high.

As the polyether compound, more specifically, compounds represented by the following general formula (3) are mentioned.

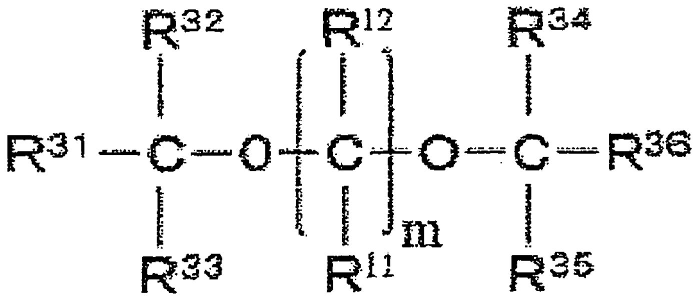

· · · (3)

In the general formula (3), m is an integer of $1 \leq m \leq 10$, more preferably an integer of $3 \leq m \leq 10$, and $R^{11}$ to $R^{36}$ represent each independently a hydrogen atom or a substituent having at least one element selected from carbon, hydrogen, oxygen, fluorine, chlorine, bromine, iodine, nitrogen, sulfur, phosphorus, boron and silicon.

When m represents 2 or more, a plurality of $R^{11}$s and $R^{12}$s may each be the same or different. Any of $R^{11}$ to $R^{36}$, preferably $R^{11}$ and $R^{12}$ may be bonded together to form a ring other than a benzene ring.

Partial specific examples of such compounds include bi-substituted dialkoxypropanes such as:

2,2-dicyclohexyl-1,3-dimethoxypropane,
2-methyl-2-isopropyl-1,3-dimethoxypropane,
2-cyclohexyl-2-methyl-1,3-dimethoxypropane,
2-isobutyl-2-methyl-1,3-dimethoxypropane,
2,2-diisobutyl-1,3-dimethoxypropane,
2,2-bis(cyclohexylmethyl)-1,3-dimethoxypropane,
2,2-diisobutyl-1,3-diethoxypropane,
2,2-diisobutyl-1,3-dibutoxypropane,
2,2-di-sec-butyl-1,3-dimethoxypropane,
2,2-dineopentyl-1,3-dimethoxypropane,
2-isobutyl-2-isopropyl-1,3-dimethoxypropane,
2-isopentyl-2-isopropyl-1,3-dimethoxypropane,
2-cyclohexyl-2-cyclohexylmethyl-1,3-dimethoxypropane,
2-methyl-2-n-propyl-1,3-diethoxypropane and
2,2-diethyl-1,3-diethoxypropane,

trialkoxyalkanes such as:

2-methoxymethyl-2-methyl-1,3-dimethoxypropane,
2-cyclohexyl-2-ethoxymethyl-1,3-diethoxypropane and
2-cyclohexyl-2-methoxymethyl-1,3-dimethoxypropane, dialkoxycycloalkanes such as:
2,2-diisobutyl-1,3-dimethoxy-cyclohexane,
2-isoamyl-2-isopropyl-1,3-dimethoxycyclohexane,
2-cyclohexyl-2-methoxymethyl-1,3-dimethoxycyclohexane,
2-isopropyl-2-methoxymethyl-1,3-dimethoxycyclohexane,
2-isobutyl-2-methoxymethyl-1,3-dimethoxycyclohexane,
2-cyclohexyl-2-ethoxymethyl-1,3-dimethoxycyclohexane,
2-ethoxymethyl-2-isopropyl-1,3-dimethoxycyclohexane and
2-isobutyl-2-ethoxymethyl-1,3-dimethoxycyclohexane, and the like.

Of them, particularly preferable are:

2-isobutyl-2-isopropyl-1,3-dimethoxypropane,
2,2-diisobutyl-1,3-dimethoxypropane,
2-isopentyl-2-isopropyl-1,3-dimethoxypropane,
2,2-dicyclohexyl-1,3-dimethoxypropane,
2,2-bis(cyclohexylmethyl)-1,3-dimethoxypropane,
2-methyl-2-n-propyl-1,3-diethoxypropane and
2,2-diethyl-1,3-diethoxypropane.

These compounds may be used alone or in combination of two or more.

The solid titanium catalyst components to be used in the present invention are, when used as a catalyst for olefin polymerization, roughly classified into a type such that the reactivity is high in an initial stage of polymerization reaction but the catalyst is de-activated in a relatively short period of time (initially active type) and a type such that though the reactivity in an initial stage of polymerization reaction is mild, the reaction tends to continue (activity continuing type). As the solid titanium catalyst component of the present invention, the latter activity continuing type will be preferable. The reason for this may be that when the reactivity is too high, it will be more likely that the surfaces of the particles of the ethylene polymer composition are molten and the particles are fused together as described above.

In this regard, preferable among the aromatic carboxylic acid esters, alicyclic carboxylic acid esters and polyether compounds are aromatic polycarboxylic acid esters, alicyclic polycarboxylic acid esters and polyether compounds, and more preferable are polyether compounds. Further, 1,3-diether compounds are preferable, and particularly

2-isobutyl-2-isopropyl-1,3-dimethoxypropane,
2,2-diisobutyl-1,3-dimethoxypropane,
2-isopentyl-2-isopropyl-1,3-dimethoxypropane,
2,2-dicyclohexyl-1,3-dimethoxypropane, and
2,2-bis(cyclohexylmethyl)-1,3-dimethoxypropane are preferable.

Though the reason is unknown, according to experiment results by the inventors, solid titanium catalyst components comprising the 1, 3-diether compounds tend to give an ethylene polymer having high degree of crystallinity.

These electron donors (a) such as the aromatic carboxylic acid esters, alicyclic carboxylic acid esters and polyether compounds may be used alone or in combination of two or more. The electron donor may be formed during the preparation of the solid titanium catalyst component [A]. Specifically, in the case where the electron donor is the ester compound, the preparation of the solid titanium catalyst component [A] may include a step in which a carboxylic anhydride or a carboxylic dihalide corresponding to the ester compound is substantially brought into contact with a corresponding alcohol. By this step, the ester compound can be incorporated in the solid titanium catalyst component.

For the preparation of the solid titanium catalyst component [A] used in the present invention, publicly known methods can be used without limitation. Specifically, for example, the following methods (P-1) to (P-4) are preferably mentioned.

(P-1) A method comprising bringing a solid adduct composed of a magnesium compound and an electron donor such as alcohol into contact with an electron donor (a) and a liquid titanium compound under suspended condition in the presence of an inert hydrocarbon solvent.
(P-2) A method comprising bringing a solid adduct composed of a magnesium compound and an electron donor such as alcohol into contact with an electron donor (a) and a liquid titanium compound in several divided operations.
(P-3) A method comprising bringing a solid adduct composed of a magnesium compound and an electron donor such as alcohol into contact with an electron donor (a) and a liquid titanium compound under suspended condition in the presence of an inert hydrocarbon solvent in several divided operations.
(P-4) A method comprising bringing a liquid magnesium compound composed of a magnesium compound and an electron donor such as alcohol into contact with a liquid titanium compound and an electron donor (a).

In the preparation of the solid titanium catalyst component [A], the reaction temperature is usually in the range of -30°C to 150°C, more preferably -25°C to 130°C, further preferably -25°C to 120°C.

Production of the solid titanium catalyst component [A] can also be carried out in the presence of a publicly known solvent if necessary. The solvents include aromatic hydrocarbons such as toluene and o-dichlorotoluene, which have slight polarity, and publicly known aliphatic hydrocarbons and alicyclic hydrocarbon compounds such as heptane, octane, decane and cyclohexane. Among them, the aliphatic hydrocarbons are preferable.

In the solid titanium catalyst component [A] used in the present invention, the halogen/titanium (atom ratio) (namely, mol number of halogen atoms/mol number of titanium atoms) is preferably 2 to 100, more preferably 4 to 90.

The magnesium/titanium (atom ratio) (namely, mol number of magnesium atoms/mol number of titanium atoms) is preferably 2 to 100, more preferably 4 to 50.

The electron donor (a)/titanium (mol ratio) (namely, mol number of an electron donor selected from aromatic carboxylic acid esters, alicyclic carboxylic acid esters and polyether compounds/mol number of titanium atoms) is preferably 0 to 100, more preferably 0.2 to 10.

[Organometallic Compound Catalyst Component [B]]

As the organometallic compound catalyst component [B] contained in the olefin polymerization catalyst, there can be used compounds containing a metal of Group 13, for example, organoaluminum compounds, complex alkylated compounds of a metal of Group 1 and aluminum, organometallic compounds of a metal of Group 2, and the like. Of them, the organoaluminum compounds are preferable.

The organometallic compound catalyst component [B] is specifically described in the above-described known documents in detail, and examples of such organometallic compound catalyst components [B] include organoaluminum compounds represented by the general formula (4).

$$R^a{}_nAlX_{3-n} \qquad (4)$$

In the general formula (4), $R^a$ represents a hydrocarbon group having 1 to 12 carbon atoms, X represents a halogen or hydrogen, and n is $1 \leq n \leq 3$.

In the general formula (4), $R^a$ represents a hydrocarbon group having 1 to 12 carbon atoms, for example, an alkyl group, cycloalkyl group or aryl group. Specific examples include methyl group, ethyl group, n-propyl group, isopropyl group, isobutyl group, pentyl group, hexyl group, octyl group, cyclopentyl group, cyclohexyl group, phenyl group, tolyl group and the like. Of them, trialkylaluminums of the above formula in which n=3, particularly, triethylaluminum, triisobutylaluminum and the like are preferable. These compounds can also be used as a mixture of two or more.

[Catalyst Component [C]]

The olefin polymerization catalyst may comprise, if necessary, a publicly known catalyst component [C], together with the organometallic compound catalyst component [B]. Preferable examples of the catalyst component [C] include organosilicon compounds. As this organosilicon compound, for example, compounds represented by the following general formula (5) are mentioned.

$$R_nSi(OR')_{4-n} \qquad (5)$$

In the general formula (5), R and R' represent a hydrocarbon group, and n is an integer of $0 < n < 4$.

Preferable specific examples of the organosilicon compounds represented by the general formula (5) include vinyltriethoxysilane, diphenyldimethoxysilane, dicyclohexyldimethoxysilane, cyclohexylmethyldimethoxysilane and dicyclopentyldimethoxysilane.

Silane compounds represented by the following general formula (6) described in WO-2004-016662A are also preferable examples of the organosilicon compounds.

$$Si(OR^a)_3(NR^bR^c) \qquad (6)$$

In the general formula (6), $R^2$ represents a hydrocarbon group having 1 to 6 carbon atoms, with preferable examples including unsaturated or saturated aliphatic hydrocarbon groups having 1 to 6 carbon atoms, and particularly preferable examples including hydrocarbon groups having 2 to 6 carbon atoms. Specific examples thereof include methyl group, ethyl group, n-propyl group, iso-propyl group, n-butyl group, iso-butyl group, sec-butyl group, n-pentyl group, iso-pentyl group, cyclopentyl group, n-hexyl group and cyclohexyl group. Among them, ethyl group is particularly preferable.

In the general formula (6), $R^b$ represents a hydrocarbon group having 1 to 12 carbon atoms or hydrogen, with preferable examples including hydrogen and unsaturated or saturated aliphatic hydrocarbon groups having 1 to 12 carbon atoms. Specific examples thereof include a hydrogen atom, methyl group, ethyl group, n-propyl group, iso-propyl group, n-butyl group, iso-butyl group, sec-butyl group, n-pentyl group, iso-pentyl group, cyclopentyl group, n-hexyl group, cyclohexyl group and octyl group. Among them, ethyl group is particularly preferable.

In the general formula (6), $R^c$ represents a hydrocarbon group having 1 to 12 carbon atoms, with preferable examples including unsaturated or saturated aliphatic hydrocarbon groups having 1 to 12 carbon atoms. Specific examples thereof include methyl group, ethyl group, n-propyl group, iso-propyl group, n-butyl group, iso-butyl group, sec-butyl group, n-pentyl group, iso-pentyl group, cyclopentyl group, n-hexyl group, cyclohexyl group and octyl group. Among them, ethyl group is particularly preferable.

Specific examples of the compounds represented by the general formula (6) include:

dimethylaminotriethoxysilane,
diethylaminotriethoxysilane,
diethylaminotrimethoxysilane,

diethylaminotriethoxysilane,
diethylaminotri-n-propoxysilane,
di-n-propylaminotriethoxysilane,
methyl-n-propylaminotriethoxysilane,
t-butylaminotriethoxysilane,
ethyl-n-propylaminotriethoxysilane,
ethyl-iso-propylaminotriethoxysilane, and
methylethylaminotriethoxysilane.

Other compounds are also useful as the catalyst component [C], with examples including the aromatic carboxylic acid esters, alicyclic carboxylic acid esters and/or polyether compounds described as compounds having two or more ether bonds via plural carbon atoms which can be used in preparing the solid titanium catalyst component [A].
Among the polyether compounds, 1,3-diether compounds are preferable, and particularly,

2-isobutyl-2-isopropyl-1,3-dimethoxypropane,
2,2-diisobutyl-1,3-dimethoxypropane,
2-isopentyl-2-isopropyl-1,3-dimethoxypropane, 2,2-dicyclohexyl-1,3-dimethoxypropane,
2,2-bis(cyclohexylmethyl)-1,3-dimethoxypropane,
2-methyl-2-n-propyl-1,3-diethoxypropane and
2,2-diethyl-1,3-diethoxypropane are preferable.

These catalyst components [C] can be used singly or in combination of two or more.
Preferable examples of the olefin polymerization catalysts which can be used in the present invention further include olefin polymerization catalysts which comprise an organometallic compound catalyst component, and metallocene compounds disclosed in JP-2004-168744A and the like or an organometallic complex having as a ligand a phenoxyimine compound as disclosed in JP-2000-128931A, JP-2004-646097A, JP-2005-2244A, JP-2005-2086A and the like.
The olefin polymerization catalyst of the present invention may comprise other components useful for olefin polymerization, if necessary, in addition to the components as described above. As the other components, for example, metal oxides such as silica and the like used mainly as a carrier, antistatic agents, particle aggregating agents, storage stabilizers and the like are mentioned.

<Method For Producing Ethylene Polymer Composition>

The method for producing ethylene polymer composition according to the present invention comprises polymerization of olefins including ethylene using the olefin polymerization catalyst. In the present invention, "polymerization"' may refer to homopolymerization and copolymerization such as random copolymerization and block copolymerization.
In the method for producing the ethylene polymer composition of the present invention, it is possible to carry out polymerization in the presence of a prepolymerized catalyst, which is obtained by prepolymerization of an α-olefin in the presence of the olefin polymerization catalyst. This prepolymerization is carried out by prepolymerizing an α-olefin in an amount of 0.1 to 1000 g, preferably 0.3 to 500 g, particularly preferably 1 to 200 g per 1 g of the solid catalyst component contained in the olefin polymerization catalyst.
In the prepolymerization, the concentration of the catalyst used can be higher than the catalyst concentration in the system in the polymerization.
It is desirable that the concentration of the solid titanium catalyst component [A] in the prepolymerization is usually 0.001 mmol to 200 mmol, preferably 0.01 mmol to 50 mmol, particularly preferably 0.1 mmol to 20 mmol in terms of titanium atom per liter of a liquid medium.
The amount of the organometallic compound catalyst component [B] in the prepolymerization may be such that a polymer is produced in an amount of 0.1 g to 1000 g, preferably 0.3 g to 500 g per 1 g of the solid titanium catalyst component [A]. It is desirable that this amount of the catalyst component is usually 0.1 mol to 300 mol, preferably 0.5 mol to 100 mol, particularly preferably mmol to 50 mol per mol of titanium atoms in the solid titanium catalyst component [A].
In the prepolymerization, the catalyst component [C] and other components can also be used if necessary. In this case, these components are used in an amount of 0.1 mol to 50 mol, preferably 0.5 mol to 30 mol, further preferably 1 mol to 10 mol per mol of titanium atoms in the solid titanium catalyst component [A].
In the prepolymerization, an olefin and the catalyst components may be added to an inert hydrocarbon medium, and the prepolymerization can be carried out under mild conditions.
In this case, specific examples of the inert hydrocarbon medium to be used include aliphatic hydrocarbons such as propane, butane, pentane, hexane, heptane, octane, decane, dodecane and kerosene;

alicyclic hydrocarbons such as cycloheptane, methylcycloheptane, cyclohexane, methylcyclohexane, methylcyclopentane, cyclooctane and methylcyclooctane;
aromatic hydrocarbons such as benzene, toluene and xylene;
halogenated hydrocarbons such as ethylene chloride and chlorobenzene; and
mixtures thereof.

Of these inert hydrocarbon media, the aliphatic hydrocarbons are particularly preferably used. When the inert hydrocarbon medium is used, the prepolymerization is preferably carried out in batch mode.

On the other hand, the prepolymerization can be carried out using an olefin itself as a solvent. The prepolymerization can be also carried out in the substantial absence of solvent. In this case, it is preferable to carry out the prepolymerization continuously.

The olefin to be used in the prepolymerization may be the same or different from the olefin which will be used in polymerization described later. Preferred examples include ethylene and propylene.

It is desirable that the temperature in the prepolymerization is usually in the range of -20 to +100°C, preferably -20 to +80°C, further preferably 0 to +40°C.

Next, the polymerization to be carried out after the prepolymerization or carried out without the prepolymerization will be described.

In the polymerization, ethylene is polymerized in the presence of the olefin polymerization catalyst. In addition to ethylene, α-olefins having 3 to 20 carbon atoms, for example, linear olefins such as propylene, 1-butene, 1-pentene 1-hexene, 1-octene, 1-decene, 1-dodecene, 1-tetradecene, 1-hexadecene, 1-octadecene and 1-eicosene, and branched olefins such as 4-methyl-1-pentene, 3-methyl-1-pentene and 3-methyl-1-butene, may be used together. Of these α-olefins, propylene, 1-butene, 1-pentene and 4-methyl-1-pentene are preferable.

Together with these α-olefins, aromatic vinyl compounds such as styrene and allylbenzene; and alicyclic vinyl compounds such as vinylcyclohexane and vinylcycloheptane can also be used.

In the present invention, the prepolymerization and the polymerization can be carried out by any of liquid phase polymerization methods such as bulk polymerization, solution polymerization and suspension polymerization, or gas phase polymerization methods.

When the polymerization is slurry polymerization, as the reaction solvent, the inert hydrocarbons used in the prepolymerization can be used, and olefins which are liquid at the reaction temperature can also be used.

In the polymerization in the polymerization method of the present invention, the solid titanium catalyst component [A] is usually used in an amount of 0.0001 mmol to 0.5 mmol, preferably 0.005 mmol to 0.1 mmol in terms of titanium atom per liter of the polymerization volume. The organometallic compound catalyst component [B] is used in an amount of usually 1 mol to 2000 mol, preferably 5 mol to 500 mol per mole of titanium atoms in the solid titanium catalyst component [A] (in the prepolymerized catalyst component, if the prepolymerization is carried out) in the polymerization system. When the catalyst component [C] is used, it is used in an amount of 0.001 mol to 50 mol, preferably 0.01 mol to 30 mol, particularly preferably 0.05 mol to 20 mol based on the organometallic compound catalyst component [B].

If the polymerization is carried out in the presence of hydrogen, the molecular weight of the resultant polymer can be controlled.

In the polymerization in the present invention, the olefin polymerization temperature is usually 20°C to 200°C, preferably 30°C to 100°C, more preferably 50°C to 90°C. The pressure is usually set at ordinary pressure to 10 MPa, preferably, 0.20 MPa to 5 MPa. In the polymerization method of the present invention, the polymerizations of the component (a) and the component (b) each can be carried out by any of batch-wise mode, semi-continuous mode and continuous mode.

The process for preparing the ethylene polymer composition comprises carrying out the polymerization in two or more stages:

an initial first stage of producing an ethylene polymer (a) with an intrinsic viscosity [n](a) of not less than 2 dUg and not more than 20 dUg, and
asubsequent second stage of producing an ethylene polymer (b) with an intrinsic viscosity [η](b) of more than 35 dUg and not more than 50 dUg,
with the mass ratio (a)/(b) being from 5/95 to 50/50 and the intrinsic viscosity [η](total) for the entire composition being more than 30 dUg and not more than 50 dUg,
wherein the intrinsic viscosity values [η](a) and [η](total) are measured in decalin solvent at 135°C and [η](b) is calculated by the formula

$$[\eta](b) = ([\eta](total) - [\eta](a) \times w(a)) / w(b)$$

wherein w(a) and w(b) are the mass fractions of the polymer (a) and the polymer (b), respectively.

As a specific example of the method for producing the ethylene polymer composition of the present invention, preferable is the production of ethylene polymers under the conditions comprising:

a step (i) of producing the component (a), i.e., an ethylene polymer with an intrinsic viscosity [η] of not less than 2 dL/g and not more than 20 dL/g, preferably not less than 5 dL/g and not more than 18 dL/g, more preferably not less than 8 dL/g and not more than 15 dL/g, still more preferably not less than 10 dL/g and not more than 13 dL/g, and a step (ii) of producing the component (b), i.e., an ethylene polymer with an intrinsic viscosity [η] of more than 35 dL/g and not more than 50 dL/g, preferably more than 35 dL/g and not more than 45 dL/g, more preferably more than 35 dL/g and not more than 40 dL/g, still more preferably more than 35 dL/g and not more than 39 dL/g. In this case, the intrinsic viscosity of the component produced in the first stage is an observed value, and the intrinsic viscosity of the component produced in the second stage is calculated based on a formula mentioned later. It is preferable that the first stage is a step of producing the component (a), namely an ethylene polymer component having a lower molecular weight and the second stage is a step of producing the component (b), namely an ethylene polymer component having a higher molecular weight.

The upper limit and lower limit of the mass ratio of the component (a) to the component (b) depend on an intrinsic viscosity of each component, but the upper limit of the component (a) is 50%, preferably 40% and more preferably 35%, still more preferably 30%, and the lower limit is 5%, preferably 10%, more preferably 15%, most preferably 20%. On the other hand, the upper limit of the component (b) is 95%, preferably 90%, more preferably 85%, most preferably 80%, and the lower limit is 50%, preferably 60%, more preferably 65%, still more preferably 70%.

This mass ratio can be determined by a method in which an ethylene absorption amount is measured in each step, or a method in which the resins obtained in the respective steps are sampled in a small prescribed amount, and the resin production amount in each step is calculated from the mass, the slurry concentration, and the content of catalyst components in the resin, and the like. Further, the intrinsic viscosity of the polymer produced in the second stage is calculated based on the following formula.

$$[\eta](1) \times w(1) + [\eta](2) \times w(2) = [\eta](t)$$

In the formula, [η](1) represents an intrinsic viscosity of a polymer produced in the first stage; [η](2) represents an intrinsic viscosity of a polymer produced in the second stage; [η](t) represents an intrinsic viscosity of total polymers at the completion of the second stage; w(1) represents a mass fraction in the first stage; and w(2) represents a mass fraction in the second stage.

When ethylene and other optional olefins are polymerized with a catalyst comprising a solid titanium catalyst component, the polymerization reaction occurs at catalyst active sites in the solid titanium catalyst component. It is believed that a polymer produced in an initial stage of the polymerization reaction is localized on the surface of the particles of the ethylene polymer composition produced and a polymer produced in a latter stage of the polymerization reaction is localized inside the particles of the composition, similarly to the growth of an annual ring. Therefore, in the case of producing ethylene polymers in two or more stages under different reaction conditions, if the intrinsic viscosity [η] of the ethylene polymer produced in the first stage is lower than the intrinsic viscosity [η] of the ethylene polymer produced finally, it is believed that there is a high probability that the polymer having relatively lower molecular weight will form the surface of the particles of the composition and the particles are easily pressure-bonded mutually in solid phase drawing molding.

The ethylene polymer composition of the present invention can be produced by publicly known polymerization methods such as batch-mode methods and continuous mode methods. In the case of the multi-stage polymerization as described above, it is preferable to adopt batch-mode methods. The ethylene polymer composition obtained by a batch-mode process is believed to show little variation of the particles of the ethylene polymers in the composition, which are obtained in the polymerization step of the first stage and in the polymerization step of the second stage and is believed to be advantageous in the mutual bonding by pressure.

The ethylene polymer composition thus obtained may be any of homopolymers, random copolymers, block copolymers and the like. Preferably, in terms of easiness of obtaining high degree of crystallinity, the ethylene polymer composition of the present invention is preferably an ethylene homopolymer.

The ethylene polymer composition of the present invention may be a composition obtained by the polymerization of ethylene in the presence of the olefin polymerization catalyst as described above; however, it is preferable that the composition is obtained via a step of keeping the composition (the polymer) at temperatures of 90°C or higher and not more than the melting point of the polymer for 15 minutes to 24 hours.

For example, it is preferable that the composition is obtained via a step of keeping the composition at temperatures of 100°C or higher and not more than the melting point of the polymer under a gas phase atmosphere. Specific conditions are such that the temperature is usually 100°C to 140°C, preferably 105°C to 140°C, more preferably 110°C to 135°C, and the keeping time is usually 15 minutes to 24 hours, preferably 1 to 10 hours, more preferably 1 to 4 hours. Specifically mentioned are a method comprising keeping the ethylene polymer composition obtained by the polymerization under the above conditions using an oven or the like, and a method comprising carrying out a drying step or the like under the above conditions after the polymerization reaction in the production of the ethylene polymer composition. Via such treatment, the ethylene polymer composition achieves higher degree of crystallinity.

Under a liquid phase atmosphere, the ethylene polymer composition is preferably obtained via a step under conditions in which the temperature is usually 90°C to 140°C, preferably 95°C to 140°C, more preferably 95°C to 135°C, further preferably 95°C to 130°C, and the keeping time is usually 15 minutes to 24 hours, preferably 1 to 10 hours, more preferably 1 to 4 hours.

<Molded Article Comprising Ethylene Polymer Composition>

The molded article comprising the ethylene polymer composition of the present invention is obtained by molding the ethylene polymer composition by a publicly known polyethylene molding method. The molded article of the present invention tends to be excellent in strength since the ethylene polymer composition has high degree of crystallinity. When the ethylene polymer composition obtained by a multi-stage polymerization method is used, moldability tends to be excellent; and thus, the degree of freedom of the shape of the molded article is expected to increase higher than in conventional methods. Among molded articles of the present invention, a molded article obtained by a solid phase drawing molding method is particularly preferable.

Specific examples of the molded articles include a flat yarn comprising the ethylene polymer composition of the present invention and a fiber obtainable by solid phase drawing molding the ethylene polymer composition of the present invention.

With respect to conditions for the solid phase drawing molding, known conditions described in Patent Documents 3 to 5 and the like can be used without limitation except for the use of the ethylene polymer composition as mentioned above. For example, the ethylene polymer composition of the present invention is pressure-bonded under a pressure of 1 MPa or more into a sheet, and the sheet is then drawn under tension at a relatively high temperature, or drawn under pressure applied using a roll or the like. The temperature in this molding is preferably not more than the melting point of the particles of the ethylene polymer composition; however, molding at the melting point or higher is permissible provided that melt-flow does not substantially occur.

The drawability of the molded article obtained by using the ethylene polymer composition of the present invention and the physical properties of the drawn molded article can be evaluated by the following methods.

(Draw Ratio)

The particles of the ethylene polymer composition are pressed at a temperature of 136°C and a pressure of 7.1 MPa for 30 minutes to manufacture a sheet with a thickness of about 500 μm, which is then cut into a shape of longitudinal 35 mm and transverse 7 mm.

Separately, a cylindrical high-density polyethylene molded article with its tip formed in the form of convex taper is manufactured, and this molded article is halved along the center axis (hereinafter, referred to as billet).

The cut sheet is sandwiched and fixed between the halved plane faces of the billet. The billet in this state is passed at a speed of 1 cm/min through a nozzle in the form of concave taper heated at 120°C, and thereby the sheet is compression-drawn. The concave taper shape of the nozzle and the convex taper shape of the billet are correspondent. The ratio of the cross-sectional areas between the inlet and the outlet of the nozzle is 6:1, and the sheet is drawn to a six-fold in the longitudinal direction (pre-drawing).

Then, the drawn sheet obtained in the pre-drawing is cut, and set to a tensile tester (produced by INTESCO Co., Ltd.; a precision universal materials testing machine; 2005 type) so that the distance between chucks will be 9 mm. Under conditions of a temperature of 135°C and a tensile speed of 18 mm/min, the sheet is drawn uniaxially in the same direction as for the pre-drawing until occurrence of fracture.

The second draw ratio is multiplied by 6 which is the draw ratio in the pre-drawing to give a value which is evaluated as the draw ratio.

(Physical Properties)

Based on ASTM standards, with the use of a tensile tester (produced by INTESCO Co., Ltd.; a precision universal materials testing machine; 2005 type), the tensile strength and the tensile elastic modulus of the drawn molded

article can be measured.

The ethylene polymer composition of the present invention provides high performance of the draw ratio of 90-fold or more. The draw ratio is more preferably 90-fold to 500-fold, further preferably 100-fold to 400-fold, particularly preferably 120-fold to 350-fold, especially 140-fold to 350-fold.

The solid phase drawn molded article of the present invention can be molded at high draw ratio, and therefore, is expected to have high strength. Since the solid phase drawing molding is a molding method without a solvent, molding facility is relatively simple and adverse influence on environments is small; and therefore, high contribution to society is expected.

Examples

Next, the present invention will be described based on examples, but it is needless to say that the present invention is not limited to the following examples unless deviating from the gist.

In the following Examples, the following methods were applied to the measurement of the intrinsic viscosity [n], the degree of crystallinity and heat of fusion of the particles of the ethylene polymer composition.

(Intrinsic Viscosity [η])

The particles of the ethylene polymer composition were dissolved in decalin and the intrinsic viscosity [η] was measured in decalin at 135°C.

(Intrinsic Viscosity [η] Of Polymer Produced In Second Stage)

The intrinsic viscosity of the polymer produced in the second stage was calculated based on the following formula.

$$[\eta](1) \times w(1) + [\eta](2) \times w(2) = [\eta](t)$$

In the formula, [η] (1) represents an intrinsic viscosity of the polymer produced in the first stage; [η] (2) represents an intrinsic viscosity of a polymer produced in the second stage; [η] (t) represents an intrinsic viscosity of total polymers at the completion of the second stage; w(1) represents a mass fraction in the first stage; and w(2) represents a mass fraction in the second stage.

(Degree Of Crystallinity)

The degree of crystallinity was measured by a wide-angle X-ray diffraction transmission method using the following apparatus and conditions.

X ray crystal analysis apparatus: RINT2500 type apparatus manufactured by Rigaku Corporation
X ray source: CuK α Output: 50 kV, 300 mA
Detector: Scintillation counter
Sample: Particles of a polymer composition obtained were used as they were.

Specifically, about 0.002 g of the particles of the polymer composition was charged into a specimen holder. While rotating the specimen holder at 77 rpm on a rotary sample table mounted on RINT2500 type apparatus manufactured by Rigaku Corporation, the wide-angle X ray diffraction transmission measurement was carried out.

From the resultant wide-angle X ray diffraction profile, the degree of crystallinity was calculated.

(Heat of Fusion)

The heat of fusion was measured by Differential Scanning Calorimetry (DSC) : an approximately 5 mg of the particles of the ethylene polymer composition was charged into an aluminum pan, and was heated from 30°C to 200°C by raising temperature at a rate of 10°C/min with the use of a RDC-220 Robot DSC module produced by SEICO Electronics Industrial Co., Ltd. From a melting peak obtained, the heat of fusion was obtained by an ordinary method.

(Average Particle Diameter, And Proportion Of Particles With Particle Diameter Of 355 μm Or More)

Nine kinds of sieves with mesh size diameters of 44 μm, 88 μm, 105 μm, 125 μm, 149 μm, 177 μm, 250 μm, 350 μm and 1190 μm were used to grade 5 g of the particles of the ethylene polymer composition containing extremely small amount of carbon black mixed as an antistatic agent. Based on the results, the average particle diameter was calculated by measuring the median diameter by an ordinary method.

On the other hand, with respect to the proportion of particles with a particle diameter of 355 μm or more, the same grading as described above was carried out except that a sieve with a mesh diameter of 355 μm was used, and the proportion of the mass of the particles on the sieve based on the total mass of the particles before the grading was calculated. In the grading in the average particle diameter calculation method, the average particle diameter and the proportion of particles with a particle diameter of 355 μm or more can be measured at a time.

(Draw Ratio)

The particles of the ethylene polymer composition were pressed with the use of a pressing machine produced by Kodaira Seisakusho Co., Ltd., PH-10E, at a temperature of 136°C and a pressure of 7.1 MPa for 30 minutes to manufacture a sheet with a thickness of about 500 μm, which was then cut into a shape of longitudinal 35 mm and transverse 7 mm.

The above pressure is calculated from a pressure indicated on the molding machine, using the following calculation method.

(pressure indicated on the gauge) x (cross sectional area of a cylinder of the molding machine) / (area of the sheet)

Separately, a cylindrical high-density polyethylene molded article with its tip formed in the form of convex taper was manufactured, and this molded article was halved along the center axis (hereinafter, referred to as billet).

The cut sheet was sandwiched and fixed between the halved plane faces of the billet. The billet in this state was passed at a speed of 1 cm/min through a nozzle in the form of concave taper heated at 120°C, and thereby the sheet was compression-drawn. The concave taper shape of the nozzle and the convex taper shape of the billet are correspondent. The ratio of the cross-sectional areas between the inlet and the outlet of the nozzle was 6:1, and the sheet was drawn to a six-fold in the longitudinal direction (pre-drawing).

Then, the drawn sheet obtained in the pre-drawing was cut, and set to a tensile tester (produced by INTESCO Co., Ltd.; a precision universal materials testing machine; 2005 type) so that the distance between chucks would be 9 mm. Under conditions of a temperature of 135°C and a tensile speed of 18 mm/min, the sheet was drawn uniaxially in the same direction as for the pre-drawing until occurrence of fracture.

The second draw ratio was multiplied by 6 which was the magnification in the pre-drawing to give a value which was evaluated as the draw ratio. The measurement was carried out two times, and a higher value given was defined as a value of the draw ratio.

(Tensile Strength)

The tensile strength after drawing was measured as follows: a specimen drawn to a predetermined ratio was set to a tensile tester (produced by INTESCO Co., Ltd.; a precision universal materials testing machine; 2005 type) such that the distance between chucks would be 100 mm. Under environment in which the temperature was 23°C, the measurement was carried out at a tensile speed of 100 mm/min.

[Example 1]

(Preparation Of Solid Titanium Catalyst Component [A1])

75 g of anhydrous magnesium chloride, 280.3 g of decane and 308.3 g of 2-ethylhexyl alcohol were reacted by heating at 130°C for 3 hours to form a homogenous solution. Then, to this solution, 19.9 g of 2-isobutyl-2-isopropyl-1,3-dimethoxypropane was added. Further, the mixture was stirred and mixed at 100°C for 1 hour.

The homogeneous solution thus obtained was cooled down to room temperature, and then 30 mL of this

homogeneous solution was added dropwise to 80 mL of titanium tetrachloride kept at -20°C with stirring over 45 minutes. With the completion of the addition, the temperature of this mixed liquid was raised up to 110°C over 6 hours. When the temperature reached 110°C, 0.55 g of 2-isobutyl-2-isopropyl-1,3-dimethoxypropane was added to the mixed liquid, and the mixture was kept at the same temperature for 2 hours with stirring. With the completion of the reaction for 2 hours, a solid part was collected by thermal filtration, and this solid part was re-suspended in 100 mL of titanium tetrachloride, and then reacted again by heating at 110°C for 2 hours. With the completion of the reaction, a solid part was collected again by thermal filtration, and washed sufficiently with decane and hexane at 90°C until no free titanium compound was detected in the washing solution. The solid titanium catalyst component prepared by the above operation was stored as a decane slurry, and a part of this slurry was dried for the purpose of investigation of the catalyst composition. The solid titanium catalyst component [A1] thus obtained had the following composition: 2.8% by mass of titanium, 17% by mass of magnesium, 58% by mass of chlorine, 19.5% by mass of 2-isobutyl-2-isopropyl-1,3-dimethoxypropane and 1.2% by mass of 2-ethylhexyl alcohol residue.

(Polymerization)

First stage: Into a 1L polymerizer sufficiently purged with nitrogen, 500 mL of purified decane was charged at room temperature, and under the atmosphere of nitrogen, at a temperature of 78°C, 1.0 mmol of triisobutylaluminum as an organometallic compound catalyst component [B1] and 0.01 mmol in terms of a titanium atom of the solid titanium catalyst component [A1] were added. Then, 25 mL of hydrogen was added, and ethylene was fed at a constant speed of 0.3 L/min, thereby to carry out ethylene polymerization at a temperature of 80°C for 90 minutes. At this point, 10 mL of a slurry was extracted from the polymerizer, filtrated and dried to obtain a white solid. The intrinsic viscosity [η] of the white solid was measured and found to be 12.2 dL/g.
Second stage: With the completion of the polymerization, ethylene and hydrogen were purged and the pressure was returned to ordinary pressure. Ethylene was fed at a constant speed of 0.3 L/min, thereby to carry out ethylene polymerization at 70°C for 210 minutes.
With the completion of the polymerization, the slurry containing a solid produced was fil trated, and the solid was dried under reduced pressure overnight at 80°C, and further kept at 130°C for 3 hours.
Further, the sieving with a mesh size of 250 μm was carried out.
The resultant ethylene polymer composition had an intrinsic viscosity [η] of 30.6 dL/g.
No ethylene polymer composition remained at the sieve with a mesh size of 250 μm.
The mass ratio of the first stage (the component (a)) to the second stage (component (b)); the first stage (the component (a))/the second stage (the component (b)), was 30/70, which was calculated from the mass of the ethylene polymer composition obtained above and the mass of the ethylene polymer (the component (a)) sampled in the first stage. From these results, the intrinsic viscosity [η] of the polymer generated in the second stage was found to be 38.5 dL/g. The ethylene polymer composition obtained above had a degree of crystallinity of 85% and a heat of fusion by DSC method of 232 J/g.
The particles of the ethylene polymer composition were pressure-bonded at a temperature of 136°C to manufacture a sheet, and the sheet was pre-drawn at a temperature of 120°C to 6-fold by the above method.
Further, the pre-drawn sheet was cut out, and under the above conditions, the draw ratio at 135°C was measured, resulting in 232-fold.
In addition, the specimens drawn each to 100-fold, 150-fold and 200-fold were subjected to the measurement of the tensile strength by the above method.
The results are set forth in Table 1.

[Example 2]

(Polymerization)

Polymerization was carried out in the same manner as in Example 1, except that the addition amount of hydrogen in the first stage was changed to 20 mL. Further, the sieving with a mesh size of 250 μm was carried out.
The intrinsic viscosity [η] of the particles of the ethylene polymer composition obtained was found to be 32.6 dL/g. No ethylene polymer composition remained at the sieve with a mesh size of 250 μm.
The intrinsic viscosity [η] of the polymer obtained in the first stage was 17.2 dL/g. The mass ratio of the first stage (the component (a)) to the second stage (the component (b)); the first stage (the component (a))/the second stage (the component (b)), was 30/70. The intrinsic viscosity [η] of the polymer generated in the second stage was found to be 39.2 dL/g. The ethylene polymer composition obtained above had a degree of crystallinity of 85% and a heat of fusion by DSC method of 234 J/g.
The particles of the ethylene polymer composition were pressure-bonded at a temperature of 136°C to manufacture a sheet, and the sheet was pre-drawn at a temperature of 120°C to 6-fold by the above method.

Further, the pre-drawn sheet was cut out, and under the above conditions, the draw ratio at 135°C was measured, resulting in 180-fold.

In addition, the specimens drawn each to 100-fold and 150-fold were subjected to the measurement of the tensile strength by the above method.

The results are set forth in Table 1.

[Example 3]

(Polymerization)

Polymerization was carried out in the same manner as in Example 1, except that the polymerization in the first stage was carried out for 30 minutes and the polymerization in the second stage was carried out for 270 minutes. Further, the sieving with a mesh size of 250 μm was carried out.

The intrinsic viscosity [η] of the particles of the ethylene polymer composition obtained was found to be 33.6 dL/g. No ethylene polymer composition remained at the sieve with a mesh size of 250 μm.

The intrinsic viscosity [η] of the polymer obtained in the first stage was 5.0 dL/g. The mass ratio of the first stage (the component (a)) to the second stage (component (b)) ; the first stage (the component (a))/the second stage (the component (b)), was 10/90. The intrinsic viscosity [η] of the polymer generated in the second stage was found to be 36.8 dL/g. The ethylene polymer composition obtained above had a degree of crystallinity of 84% and a heat of fusion by DSC method of 234 J/g.

The particles of the ethylene polymer composition were pressure-bonded at a temperature of 136°C to manufacture a sheet, and the sheet was pre-drawn at a temperature of 120°C to 6-fold by the above method.

Further, the pre-drawn sheet was cut out, and under the above conditions, the draw ratio at 135°C was measured, resulting in 244-fold.

In addition, the specimens drawn each to 100-fold, 150-fold and 200-fold were subjected to the measurement of the tensile strength by the above method.

The results are set forth in Table 1.

[Comparative Example 1]

(Polymerization)

Polymerization was carried out in the same manner as in Example 1, except that the addition amount of hydrogen in the first stage was changed to 10 mL. Further, the sieving with a mesh size of 250 μm was carried out.

The intrinsic viscosity [η] of the particles of the ethylene polymer composition obtained was found to be 37.8 dL/g. No ethylene polymer composition remained at the sieve with a mesh size of 250 μm.

The intrinsic viscosity [η] of the polymer obtained in the first stage was 25.2 dL/g. The mass ratio of the first stage (the component (a)) to the second stage (component (b)); the first stage (the component (a))/the second stage (the component (b)), was 30/70. The intrinsic viscosity [η] of the polymer generated in the second stage was found to be 43.2 dL/g. The ethylene polymer composition obtained above had a degree of crystallinity of 85% and a heat of fusion by DSC method of 234 J/g.

The particles of the ethylene polymer composition were pressure-bonded at a temperature of 136°C to manufacture a sheet, and the sheet was pre-drawn at a temperature of 120°C to 6-fold by the above method.

Further, the pre-drawn sheet was cut out, and under the above conditions, the draw ratio at 135°C was measured, resulting in 7-fold.

The results are set forth in Table 2.

[Comparative Example 2]

(Polymerization)

Polymerization was carried out in the same manner as in Example 1, except that 10 mL of hydrogen was added before ethylene was fed in the second stage.

The intrinsic viscosity [η] of the particles of the ethylene polymer composition obtained was found to be 16.2 dL/g. No ethylene polymer composition remained at the sieve with a mesh size of 250 μm.

The intrinsic viscosity [η] of the polymer obtained in the first stage was 7.9 dL/g. The mass ratio of the first stage (the component (a)) to the second stage (component (b)); the first stage (the component (a))/the second stage

(the component (b)), was 30/70. The intrinsic viscosity [η] of the polymer generated in the second stage was found to be 19.8 dL/g. The ethylene polymer composition obtained above had a degree of crystallinity of 83% and a heat of fusion by DSC method of 220 J/g.

The particles of the ethylene polymer composition were pressure-bonded at a temperature of 136°C to manufacture a sheet, and the sheet was pre-drawn at a temperature of 120°C to 6-fold by the above method.

Further, the pre-drawn sheet was cut out, and under the above conditions, the draw ratio at 135°C was measured, resulting in 102-fold.

In addition, a specimen drawn to 100-fold was subjected to the measurement of the tensile strength by the above method.

The results are set forth in Table 2.

[Table 1]

| | | | Example 1 | Example 2 | Example 3 |
|---|---|---|---|---|---|
| Polymerization activity | | g/mmol-Ti | 10,000 | 10,000 | 11,000 |
| | | | | | |
| Component (a) | Intrinsic viscosity [η] | dL/g | 12.2 | 17.2 | 5.0 |
| | Ratio of Polymer | % | 30 | 30 | 10 |
| | | | | | |
| Component (b) | Intrinsic viscosity [η] | dL/g | 38.5 | 39.2 | 36.8 |
| | Ratio of Polymer | % | 70 | 70 | 90 |
| | | | | | |
| Entire particles | Intrinsic viscosity [η] | dL/g | 30.6 | 32.6 | 33.6 |
| | Average particle diameter | μ | 180 | 170 | 190 |
| | Degree of crystallinity | % | 85 | 85 | 84 |
| | Heat of fusion | J/g | 232 | 234 | 234 |
| | Draw Ratio | fold | 232 | 180 | 244 |
| | Fiber tensile strength (100-fold) | GPa | 2.3 | 2.5 | 2.4 |
| | Fiber tensile strength (150-fold) | GPa | 2.6 | 2.7 | 2.7 |
| | Fiber tensile strength (200-fold) | GPa | 2.7 | - | 2.9 |

[Table 2]

| | | | Comparative Example 1 | Comparative Example 2 |
|---|---|---|---|---|
| Polymerization activity | | g/mmol-Ti | 11,000 | 9,020 |
| | | | | |
| Component (a) | Intrinsic viscosity [η] | dL/g | 25.2 | 7.9 |
| | Ratio of Polymer | % | 30 | 30 |
| | | | | |
| Component (b) | Intrinsic viscosity [η] | dL/g | 43.2 | 19.8 |
| | Ratio of Polymer | % | 70 | 70 |
| | | | | |

(continued)

| | | | Comparative Example 1 | Comparative Example 2 |
|---|---|---|---|---|
| Entire particles | Intrinsic viscosity [η] | dL/g | 37.8 | 16.2 |
| | Average particle diameter | μ | 175 | 190 |
| | Degree of crystallinity | % | 85 | 83 |
| | Heat of fusion | J/g | 234 | 220 |
| | Draw Ratio | fold | 7 | 102 |
| | Fiber tensile strength (100-fold) | GPa | - | 1.0 |
| | Fiber tensile strength (150-fold) | GPa | - | - |
| | Fiber tensile strength (200-fold) | GPa | - | - |

Industrial Applicability

The ethylene polymer composition of the present invention is a composition comprising components each having a specific molecular weight, and thus can be used preferably for a battery separator film, a gel-spinning process fiber, a sheet or the like.

In particular, when the composition is solid phase drawn molded, a molded article having high strength is obtainable, and thus the composition can be used preferably for solid phase drawing molding.

## Claims

**1.** An ethylene polymer composition obtainable by a process comprising carrying out the polymerization in two or more stages:

an initial first stage of producing an ethylene polymer (a) with an intrinsic viscosity [η] of not less than 2 dL/g and not more than 20 dL/g and
a subsequent second stage of producing an ethylene polymer (b) with an intrinsic viscosity [η] of more than 35 dL/g and not more than 50 dL/g,
with the mass ratio (a) / (b) being from 5/95 to 50/50 and
the intrinsic viscosity [η] (total) for the entire composition being more than 30 dL/g and not more than 50 dL/g
wherein the intrinsic viscosity values [η] (a) and [η] (total) are measured in decalin solvent at 135°C and [η] (b) is calculated by the formula

$$[\eta](b) = ([\eta](total) - [\eta](a) \times w(a)) / w(b)$$

wherein w(a) and w(b) are the mass fractions of the polymer (a) and the polymer (b), respectively.

**2.** The ethylene polymer composition according to claim 1, which has a degree of crystallinity of not less than 80%.

**3.** The ethylene polymer composition according to claim 1 or 2, the proportion of particles with a particle diameter of 355 μm or more is 2% by mass or less of the total particles and the average particle diameter is 100 μm to 300 μm.

**4.** The ethylene polymer composition according to any one of claims 1 to 3, which is obtainable from the reaction of not less than 500 g of ethylene per 1 g of a solid catalyst component.

**5.** The ethylene polymer composition according to any one of claims 1 to 4, which is obtainable by polymerizing olefins including ethylene in the presence of an olefin polymerization catalyst comprising:

a solid titanium catalyst component [A] comprising magnesium, a halogen and titanium, and
an organometallic compound catalyst component [B] comprising a metal element selected from Group 1, Group 2 and Group 13 of the periodic table.

**6.** A method for producing the ethylene polymer composition according to any one of claims 1 to 4, comprising:

a step of polymerizing olefins including ethylene in two or more stages, including an initial first stage for polymerizing the polymer (a) and a subsequent second stage for polymerizing the polymer (b), in the presence of an olefin polymerization catalyst comprising:

a solid titanium catalyst component [A] comprising magnesium, a halogen and titanium, and
an organometallic compound catalyst component [B] including a metal element selected from Group 1, Group 2 and Group 13 of the periodic table; and
a step of keeping a polymer obtained in the above step at temperatures of 90°C or higher and not more than a melting point of the polymer for 15 minutes to 24 hours.

**7.** A process for producing the ethylene polymer composition according to any one of claims 1 to 4, comprising a polymerization in two stages:

an initial first stage of producing an ethylene polymer (a) with an intrinsic viscosity [η] of not less than 2 dL/g and not more than 20 dL/g, and
a subsequent second stage of producing an ethylene polymer (b) with an intrinsic viscosity [η](b) of more than 35 dL/g and not more than 50 dL/g,
with the mass ratio (a)/(b) being from 5/95 to 50/50 and
the intrinsic viscosity [η](total) for the entire composition being more than 30 dL/g and not more than 50 dL/g, wherein the intrinsic viscosity values [η] (a) and (n] (total) are measured in decalin solvent at 135°C and [η] (b) is calculated by the formula

$$[\eta](b) = ([\eta](total) - [\eta](a) \times w(a)) / w(b)$$

wherein w(a) and w(b) are the mass fractions of the polymer (a) and the polymer (b), respectively.

**8.** A molded article obtainable by using the ethylene polymer composition according to any one of claims 1 to 5.

**9.** The molded article according to claim 8, which is obtainable by solid phase drawing molding.

**10.** A flat yarn comprising the ethylene polymer composition according to any one of claims 1 to 5.

**11.** A fiber obtainable by solid phase drawing molding the ethylene polymer composition according to any one of claims 1 to 5.

**Patentansprüche**

**1.** Ethylenpolymerzusammensetzung, erhältlich durch ein Verfahren, das die Durchführung der Polymerisation in zwei oder mehr Stufen umfasst:

eine anfängliche erste Stufe des Herstellens eines Ethylenpolymers (a) mit einer intrinsischen Viskosität [η] (a) von nicht weniger als 2 dl/g und nicht mehr als 20 dl/g, und
eine nachfolgende zweite Stufe des Herstellens eines Ethylenpolymers (b) mit einer intrinsischen Viskosität [η] (b) von mehr als 35 dl/g und nicht mehr als 50 dl/g,
wobei das Massenverhältnis (a)/(b) von 5/95 bis 50/50 ist und die intrinsische Viskosität [η] (total) für die gesamte Zusammensetzung mehr als 30 dl/g und nicht mehr als 50 dl/g ist,
worin die Werte der intrinsischen Viskosität [η] (a) und [η] (total) in Decalin-Lösungsmittel bei 135°C gemessen werden und [η] (b) durch die Formel berechnet wird:

$$[\eta](b) = ([\eta](total) - [\eta](a) \times w(a)) / w(b)$$

worin w(a) und w(b) die Massenbrüche des Polymers (a) bzw. des Polymers (b) sind.

**2.** Ethylenpolymerzusammensetzung gemäß Anspruch 1, die einen Kristallinitätsgrad von nicht weniger als 80 % hat.

**3.** Ethylenpolymerzusammensetzung gemäß Anspruch 1 oder 2, worin der Anteil an Teilchen mit einem Teilchendurchmesser von 355 μm oder weniger 2 Massen% oder weniger der gesamten Teilchen ist und der mittlere Teilchendurchmesser 100 μm bis 300 μm ist.

**4.** Ethylenpolymerzusammensetzung gemäß irgendeinem der Ansprüche 1 bis 3, die erhältlich ist durch Umsetzung von nicht weniger als 500 g Ethylen pro 1 g an fester Katalysatorkomponente.

**5.** Ethylenpolymerzusammensetzung gemäß irgendeinem der Ansprüche 1 bis 4, die erhältlich ist durch Polymerisieren von Olefinen einschließlich Ethylen in Gegenwart eines Olefin-Polymerisationskatalysators, umfassend:

eine feste Titankatalystorkomponente [A], die Magnesium, ein Halogen und Titan umfasst, und
eine Katalysatorkomponente [B] einer organometallischen Verbindung, die ein Metallelement ausgewählt aus Gruppe 1, Gruppe 2 und Gruppe 13 des Periodensystems umfasst.

**6.** Verfahren zur Herstellung der Ethylenpolymerzusammensetzung gemäß irgendeinem der Ansprüche 1 bis 4, umfassend:

einen Schritt des Polymerisierens von Olefinen einschließlich Ethylen in zwei oder mehr Stufen, einschließlich einer anfänglichen ersten Stufe zum Polymerisieren des Polymers (a) und einer nachfolgenden zweiten Stufe zum Polymerisieren des Polymers (b), in Gegenwart eines Olefin-Polymerisationskatalysators, umfassend:

eine feste Titankatalystorkomponente [A], die Magnesium, ein Halogen und Titan umfasst, und
eine Katalysatorkomponente [B] einer organometallischen Verbindung, die ein Metallelement ausgewählt aus Gruppe 1, Gruppe 2 und Gruppe 13 des Periodensystems umfasst; und
einen Schritt des Haltens des im obigen Schritt erhaltenen Polymers bei Temperaturen von 90°C oder höher und nicht mehr als ein Schmelzpunkt des Polymers für 15 Minuten bis 24 Stunden.

**7.** Verfahren zur Herstellung der Ethylenpolymerzusammensetzung gemäß irgendeinem der Ansprüche 1 bis 4, das eine Polymerisierung in zwei Stufen umfasst:

eine anfängliche erste Stufe des Herstellens eines Ethylenpolymers (a) mit einer intrinsischen Viskosität [η](a) von nicht weniger als 2 dl/g und nicht mehr als 20 dl/g, und
eine nachfolgende zweite Stufe des Herstellens eines Ethylenpolymers (b) mit einer intrinsischen Viskosität [η](b) von mehr als 35 dl/g und nicht mehr als 50 dl/g,
wobei das Massenverhältnis (a)/(b) von 5/95 bis 50/50 ist und die intrinsische Viskosität [η](total) für die gesamte Zusammensetzung mehr als 30 dl/g und nicht mehr als 50 dl/g ist,
worin die Werte der intrinsischen Viskosität [η](a) und [η](total) in Decalin-Lösungsmittel bei 135°C gemessen werden und [η] (b) durch die Formel berechnet wird:

$$[\eta](b) = ([\eta](total) - [\eta](a) \times w(a)) / w(b)$$

worin w(a) und w(b) die Massenbrüche des Polymers (a) bzw. des Polymers (b) sind.

**8.** Geformtes Erzeugnis, erhältlich durch Einsatz der Ethylenpolymerzusammensetzung gemäß irgendeinem der Ansprüche 1 bis 5.

**9.** Geformtes Erzeugnis gemäß Anspruch 8, das durch Festphasenzugformen erhältlich ist.

**10.** Flachgarn, das die Ethylenpolymerzusammensetzung gemäß irgendeinem der Ansprüche 1 bis 5 umfasst.

**11.** Faser, erhältlich durch Festphasenzugformen der Ethylenpolymerzusammensetzung gemäß irgendeinem der Ansprüche 1 bis 5.

## Revendications

**1.** Composition de polymère d'éthylène pouvant être obtenue par un procédé comprenant la mise en oeuvre de la polymérisation en deux ou plusieurs étapes :

une première étape initiale de fabrication d'un polymère d'éthylène (a) ayant une viscosité intrinsèque [η](a) qui n'est pas inférieure à 2 dL/g et pas supérieure à 20 dL/g, et
une seconde étape consécutive de fabrication d'un polymère d'éthylène (b) ayant une viscosité intrinsèque [η](b) qui est supérieure à 35 dL/g et n'est pas supérieure à 50 dL/g,
le rapport de masse (a)/(b) étant de 5/95 à 50/50 et la viscosité intrinsèque [η](total) pour l'ensemble de la composition étant supérieure à 30 dL/g et n'étant pas supérieure à 50 dL/g,
dans laquelle les valeurs de viscosité intrinsèque [η](a) et [η](total) sont mesurées dans un solvant de décaline à 135 °C et [η](b) est calculée par la formule

$$[\eta](b) = ([\eta](total) - [\eta](a) \text{ x } w(a)) / w(b)$$

dans laquelle w(a) et w(b) sont les fractions de masse du polymère (a) et du polymère (b), respectivement.

**2.** Composition de polymère d'éthylène selon la revendication 1, qui a un degré de cristallinité qui n'est pas inférieur à 80 %.

**3.** Composition de polymère d'éthylène selon la revendication 1 ou 2, la proportion de particules ayant un diamètre de particule de 355 μm ou plus étant de 2 % en masse ou moins des particules totales et le diamètre de particule moyen étant de 100 μm à 300 μm.

**4.** Composition de polymère d'éthylène selon l'une quelconque des revendications 1 à 3, qui peut être obtenue à partir de la réaction de pas moins de 500 g d'éthylène pour 1 g de composant catalyseur solide.

**5.** Composition de polymère d'éthylène selon l'une quelconque des revendications 1 à 4, qui peut être obtenue par polymérisation d'oléfines incluant de l'éthylène en la présence d'un catalyseur de polymérisation des oléfines comprenant :

un composant catalyseur au titane solide [A] comprenant du magnésium, un halogène et du titane, et
un composant catalyseur à composé organométallique [B] comprenant un élément métallique choisi dans le groupe 1, le groupe 2 et le groupe 13 de la table périodique.

**6.** Procédé de fabrication de la composition de polymère d'éthylène selon l'une quelconque des revendications 1 à 4, comprenant :

une étape de polymérisation d'oléfines y compris l'éthylène en deux étapes ou plus, comprenant une première étape initiale de polymérisation du polymère (a) et une seconde étape consécutive de polymérisation du polymère (b), en la présence d'un catalyseur de polymérisation d'oléfines comprenant :

un composant catalyseur au titane solide [A] comprenant du magnésium, un halogène et du titane, et
un composant catalyseur à composé organométallique [B] comprenant un élément métallique choisi dans le groupe 1, le groupe 2 et le groupe 13 de la table périodique ; et
une étape de maintien d'un polymère obtenu dans l'étape ci-dessus à des températures de 90 °C ou plus et ne dépassant pas un point de fusion du polymère pendant 15 minutes à 24 heures.

**7.** Procédé de fabrication de la composition de polymère d'éthylène selon l'une quelconque des revendications 1 à 4, comprenant une polymérisation en deux étapes :

une première étape initiale de fabrication d'un polymère d'éthylène (a) ayant une viscosité intrinsèque [η](a) qui n'est pas inférieure à 2 dL/g et pas supérieure à 20 dL/g, et
une seconde étape consécutive de fabrication d'un polymère d'éthylène (b) ayant une viscosité intrinsèque [η](b) qui est supérieure à 35 dL/g et n'est pas supérieure à 50 dL/g,
le rapport de masse (a)/(b) étant de 5/95 à 50/50 et la viscosité intrinsèque [η](total) pour l'ensemble de la composition étant supérieure à 30 dL/g et n'étant pas supérieure à 50 dL/g,
dans lequel les valeurs de viscosité intrinsèque [η](a) et [η](total) sont mesurées dans un solvant de décaline à 135 °C et [η](b) est calculée par la formule

$$[\eta](b) = ([\eta](total) - [\eta](a) \times w(a)) / w(b)$$

dans laquelle w(a) et w(b) sont les fractions de masse du polymère (a) et du polymère (b), respectivement.

**8.** Article moulé pouvant être obtenu en utilisant la composition de polymère d'éthylène selon l'une quelconque des revendications 1 à 5.

**9.** Article moulé selon la revendication 8, qui peut être obtenu par moulage par étirage en phase solide.

**10.** Fil plat comprenant la composition de polymère d'éthylène selon l'une quelconque des revendications 1 à 5.

**11.** Fibre pouvant être obtenue par moulage par étirage en phase solide de la composition de polymère d'éthylène selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3130116 A
- JP 7156173 A
- JP 9254252 A
- JP 63041512 A
- JP 63066207 A
- WO 2008013144 A
- JP 63010647 A
- EP 0227838 A
- WO 2003022920 A1
- US 20040039115 A1
- JP 6322190 A
- EP 0617081 A
- JP 56000811 A
- JP 57063310 A
- JP 58083006 A
- JP 3000706 A
- JP 2255810 A
- JP 4218509 A
- WO 2004016662 A
- JP 2004168744 A
- JP 2000128931 A
- JP 2004646097 A
- JP 2005002244 A
- JP 2005002086 A